# EUROPEAN PATENT APPLICATION

(11) **EP 4 570 717 A1**
(43) Date of publication of application: **18.06.2025**
(21) Application number: 23216005.1
(22) Date of filing: 12.12.2023
(51) Int. Cl.: B65G 47/91, B25J 15/06

(54) **A GRIPPER DEVICE**

(71) Applicant: Anheuser-Busch InBev S.A., 1000 Brussels (BE)
(72) Inventor: DE BLENDE, Stef, B-9220 Hamme (BE); ROMBAUT, David, B-9220 Hamme (BE); VANCOSTER, Roderik, B-9220 Hamme (BE); PEELMAN, Manu, B-9220 Hamme (BE); FERREIRA, Glenn, B-3000 Leuven (BE); DUPERRAY, Philippe Jean Marie, 36000 Châteauroux (FR)
(74) Representative: Marks & Clerk LLP

(57) **Abstract**

A gripper device for gripping a container is disclosed. The gripper device comprises a housing, a connector, an alignment body and a suction cup. The housing comprises at least a first end and a second end, the housing extending in an axial direction. The connector is at the second end of the housing for mounting the gripper device to a transportation device. The alignment body, provided at the first end of the housing, is engageable with the container to locate the container. The suction cup, provided at the first end of the housing, has a lip that is engageable with the container. The suction cup has an extended configuration and a gripping configuration. The suction cup is configured for fluid connection to a vacuum generator. In the extended configuration, the lip of the suction cup projects axially beyond the alignment body for first contact with the container. In the gripping configuration, the lip of the suction cup is engageable with the container and is retracted axially, relative to the alignment body, such that the gripped container is urged into engagement with the alignment body to locate the container.

## Description

### FIELD

The present invention relates to a gripper device, a system for transporting containers comprising one or more gripper devices, and a method of gripping an end of a container using a gripper device.

### BACKGROUND

In a new age of robotics and individual movers, the need has arisen for individual and independent article (e.g. primary or secondary packaging) handling. Current solutions suffer from either being universal (i.e. designed to operate with a range of different articles, and thus not being specialised for interaction with any of the articles) and/or from being for mass pick-up (e.g. simultaneous gripping of a plurality of articles). With new technologies, a demand for individual article pick-up has arisen, along with the need for the individual article to be located relative to the gripper.

It is known in the art to manipulate containers in the field of Fast Moving Consuming Goods (FMCG) such as beverage cans, tin cans, jars and bottles, for a variety of different purposes. For example, it is necessary to manipulate such containers to transport batches of empty containers to a filling line. Once filled and capped or similar, it is also necessary to then manipulate the filled containers into secondary packaging for bulk transport to retailers or similar.

Presently, containers are manipulated using a variety of different means including, but not limited to, mechanical finger grippers and vacuum grippers.

It has been found that existing solutions lack the precision required to be able to both grip and align the container ahead of the container being individually manipulated. Existing solutions are also relatively large, slow to operate and can result in misalignments at both pick-up and drop-off of the containers.

Commercially available grippers are presently not configured to meet all the size, performance and functional requirements of present day individual container handling. Importantly, known grippers are unable to grip the container without disturbing the rotational alignment with the machine during hold or release operations; in particular while also centralising the container to the axis of the gripper (i.e. hold the container end concentric with the axis of the gripper) and aligning the axis of the container with the axis of the gripper (i.e. hold the container end perpendicular to the gripper axis).

No single commercially available gripper has been found to hold, centralise and locate individual containers from the top (or from the bottom if inverted) and also be configured that the gripper is smaller than the article being attached to so that multiple grippers holding one container each may be individually actuated to form groups of gripped containers in side wall (cylindrical body) contact with each other.

Additionally, existing solutions typically have slow attach and release actions; insecure retention such that swing or oscillation of the container occurs relative to the gripper during translations; and are unable to achieve strong attachment forces, which can result in difficulties during rapid acceleration or deceleration of the supported container.

Some existing robot end effectors are configured to pick up and place collated groups of containers not individual containers. The existing vacuum end effectors are essentially large vacuum pads acting on the top rim of empty or sealed containers, i.e. acting on groups of containers, not on individual containers.

It would be desirable to provide a device that enables a simple, fast, secure, located and latched, tool-less mounting of the gripper in a machine head.

There exists a need to overcome one or more of the disadvantages associated with existing gripping solutions, whether mentioned in this document or otherwise.

### SUMMARY

According to a first aspect of the invention there is provided a gripper device for gripping a container, the gripper device comprising:
a housing comprising at least a first end and a second end, the housing extending in an axial direction;
a connector at the second end of the housing for mounting the gripper device to a transportation device;
an alignment body, provided at the first end of the housing, engageable with the container to locate the container; and
a suction cup, provided at the first end of the housing, the suction cup having a lip that is engageable with the container, the suction cup having an extended configuration and a gripping configuration, the suction cup being configured for fluid connection to a vacuum generator; wherein:
   in the extended configuration, the lip of the suction cup projects axially beyond the alignment body for first contact with the container; and
   in the gripping configuration, the lip of the suction cup is engageable with the container and is retracted axially, relative to the alignment body, such that the gripped container is urged into engagement with the alignment body to locate the container.

The gripper device may be for gripping an end of the container (e.g. a top or bottom of a container). In other embodiments the lip of the bellows suction cup may not make first (soft) contact with the container. Gripping may otherwise be described as retaining or temporarily holding.

The transportation device may comprise a robotic arm, independent mover of a transport system, machine head or similar.

The suction cup may be a bellows suction cup. The bellows suction cup may have a pleated cross section, preferably between a suction cup mounting and the (engagement) lip of the suction cup. The suction cup may be configured for fluid connection with a port for connection to the vacuum generator. The suction cup may not be a bellows suction cup, and the extended/gripping configurations may instead be at least partly defined by a position of an axially moveable body to which the suction cup is mounted. For example, the suction cup may be mounted to a piston or other linearly moveable mechanism that is retracted by inducing a vacuum.

The vacuum generated by the vacuum generator is intended to encompass a pressure reduced below atmospheric pressure, as well as a scientific vacuum (e.g. zero vacuum). The vacuum generator may be located within the housing. In another embodiment the vacuum generator could be mounted on the transport device side of the gripper connection (mounting) with the machine. In another embodiment, the vacuum generator may be a central vacuum pump with appropriate, hoses, reservoirs and/or solenoid valves to fluidly connect the suction cup to the central vacuum pump.

In the gripping configuration, the lip may be said to engage the container. Upon a vacuum being applied, the lip may be said to be cause to attach to the container. Under vacuum the lip may be caused to retract axially, relative to the alignment body, such that the attached container is urged into engagement with the alignment body to locate the gripped container.

The present disclosure provides a gripper device that does not require interaction of moving parts, has low maintenance requirements, has a slim profile, has a high grip force, is fast acting (e.g. quick grip and release), is leak-compensating, provides soft gripping and detachment, avoids unintentional rotational disturbance, is compact, is lightweight, and is strong.

A key benefit of embodiments disclosed herein is the ability to grip a container at its end without disturbing the rotational orientation of the container (and subsequently release the container without [unintentionally] disturbing the rotational orientation). The gripper device can do this, while also centralising and axially aligning the container with the axis of the gripper device. This is provided by a gripper device that has fast acting attach and release functionality and the ability to accommodate minor misalignment between the gripper device and the container at the moment of attachment.

Other benefits of examples according to the disclosure include individual container picking of containers standing close together (e.g. with side contact), the formation of groups of containers in orthogonal (rows & columns) four side contact or nested three side contact with each other (enabled by having the gripper cross section smaller than that of the smallest container cross section; quick, secure, positively located (aligned) tool-less mounting of the gripper device in the machine head; quick, secure, positively located and retained, tool-less mounting of exchangeable parts allowing the gripper device to act on different series of container ends; the ability to detect a failed picking operation, dropped or otherwise incorrectly retained container via an integrated electrical sensor; and the ability to track the presence and type of gripper device or bottle tulip mounted in each gripper docking station of the machine and, if a gripper device, which alignment body is inserted in the application end of the gripper device before initiating production, through the use of an integrated component identification. The examples also provide positive and swift release of containers from the gripper device, which is useful at high throughputs, through the use of a needle valve and flow reversing solenoid. The gripper device also does not mark, scratch or otherwise spoil the container to be gripped.

The bellows suction cup may be configured to resist rotation of the lip of the bellows suction cup, relative to the alignment body, between the extended configuration and the gripping configuration.

Described another way, the bellows suction cup is a stiff but flexibly moulded elastomeric component mounted on and axially and rotationally fixed relative to the alignment body. The lip of the bellows suction cup therefore tends to remain aligned through resistance to being twisted that exists in the least torsionally stressed state relative to the base of the bellow suction cup, upon which it is mounted. Thus while the lip of the moulded bellows suction cup tends to remain axially aligned to the base upon which the component is mounted, by design the bellows portion of the bellows suction cup remains flexible in the axial direction due to the one of more pleats of the bellows in the cross-sectional profile. Just as the bellows of the bellows suction cup relax axially to a longer dimension in the extended configuration (minimum internal stresses), the bellows suction cup resists being twisted and provides a corrective moment to return to the least torsionally stressed state. By resisting rotation of the lip between the extended and gripping configurations, the rotational orientation of the picked container will remain substantially undisturbed with respect to the gripper device. Once gripped and thus the container is pulled up against the alignment body and hence centered and axially aligned with the gripper device, the gripper device can be used to rotate the container, by virtue of rotation of the gripper device, to provide, for example, a uniform rotational alignment of the container for label oriented placement into secondary packaging. This is particularly desirable for reasons of being able to align any art, decoration or identification code (e.g. Barcode, QR Code or Dot Matrix Code), applied to the container, uniformly or deliberately different with respect to other containers in a pack or multipack. In practice, rotational mis-alignment becomes readily detectable at rotations greater than about 3°. It will be appreciated that there may still be a slight rotational offset of the container through the picking and releasing operations of the gripper but via the soft but secure first attachment action of the bellows suction cup and then firm pull against the alignment device for secure holding, followed, after any container transportation and/or rotary orientation operation, by first the release from the alignment device and only then release from the lip of the bellows suction cup, any rotational disturbance of the container is limited to much less than the 3° tolerance.

The alignment body may be configured to centralise and align the container relative to an axis of the gripper device.

The alignment body may be configured to centralise an axis of the container with respect to the axial direction. The alignment body may be configured to align the axis of the container with the axial direction. The axis of the gripper device may be described as defining the axial direction. By centralising and aligning the container in the axial direction, the position of the container is fixed with respect to the gripper device.

The alignment body may be engageable with the container to locate the container in the axial direction and in a plane normal to the axial direction. By centralising and aligning the container in both the axial direction and in a plane normal to the axial direction, the container is made coaxial and fixed with respect to the gripper device. The gripper device can therefore be used to constrain the axial and rotational alignment of the container.

The alignment body may comprise at least part of an alignment ring.

The alignment body may comprise a continuous, circumferentially extending alignment ring. Alternatively, the alignment body may instead comprise an intermittent alignment ring (e.g. a plurality of discrete bodies).

Advantageously, the alignment ring provides a way of circumferentially locating a container having a circular rim or other circular feature (e.g. a can having a circumferentially extending rim, or a glass jar having a circular lid).

An internal surface and/or an external surface of the alignment body may be engageable with a corresponding feature of the container. The corresponding feature of the container may be a rim.

The container (e.g. a rim thereof) may be received in a recess of the alignment body and/or a feature of the alignment body may be received in a recess of the container.

The alignment body may comprise a tapered surface configured to concentrically locate the container. The alignment body may comprise a concaved and/or convexed tapered surface configured to concentrically, or otherwise in a desired fashion, locate the container. The alignment body may comprise a shaped recess designed to engage the shaped top e.g. cap or closure of a container (the random or regular orientation of containers being determined (e.g. scanned) and the grippers oriented by the machine head to correspond the with orientation of the containers, as scanned, ahead of engaging and gripping the containers, individually).

The alignment body may comprise a plurality of tapered surfaces. The tapered surface may otherwise be described as a wedge-shaped surface. The tapered surface preferably provides increased lead-in towards the final engagement surfaces of the alignment body when moving in a direction away from the gripper device. Concentrically locating the container may otherwise be described as urging an axis of the container to be substantially coaxial with an axis of the gripper device.

Advantageously, a tapered surface provides more room for misalignment initially and, as the container is urged along the tapered surface, gradually aligns the container with respect to the gripper device.

The alignment body may comprise a shoulder configured to axially locate the container. The shoulder may also cause the container to be axially aligned with the gripper axis.

The shoulder may otherwise be described as an (annular) ledge. The shoulder may otherwise be described as an axial backstop, positioning the container axially.

Advantageously, the incorporation of the shoulder to axially locate the container fixes the axial position of the container with respect to the gripper device. A shoulder also provides a limit to the axial travel of the container, and so the bellows suction cup, reducing the risk of damage occurring to the bellows suction cup.

The alignment body may be modular such that it can be disconnected and reconnected to the housing.

The alignment body may be preferably connected to the housing of the gripper device employing any manner of quick arrangement known in the art and performing toolless component or device docking, mounting, location and retention, for example and not limited to: a bayonet coupling, twist-lock, spline or keyed collet and lock nut or located and magnetically retained connection.

Further to the preferable toolless quick connect mounting of the alignment body at the first end of the housing, the whole gripper assembly may be mounted in the machine head or transportation device via a similar and likewise preferably toolless, quick connect, means of mounting located at the second end of the housing.

Advantageously, the alignment body being modular means that a single gripper device can be used to align different containers by swapping out the alignment body. For example, a first alignment body may be suited for use with comparatively narrower diameter cans (e.g. around 53 mm), whereas an alternative alignment body may be particularly suited for use with larger diameter cans (e.g. around 58 mm). The alignment bodies can thus be swapped out whilst the rest of the components within the gripper device remain unchanged.

The suction cup may be modular. The alignment body and suction cup may form an integrated modular assembly in that the alignment body and suction cup can be swapped simultaneously as a single component. The mounting, location and retention of the alignment body and suction cup, as well as a pneumatic (e.g. vacuum) connection of the suction cup to the vacuum generator, may be obtained in a single step. If one or more sensors are present, any electrical connections for the sensors may be made in the same step.

The gripper device may further comprise one or more sensors. For example, the gripper device may comprise a sensor configured to detect engagement of the alignment body with the container. The one or more sensors may be configured to detect the presence and/or type of alignment body mounted to the gripper device.

Advantageously, the sensor can be used to detect engagement of the alignment body with the container e.g. a correctly gripped container. The sensor may output a signal indicative that the container has been correctly gripped. The sensor may output a signal indicative of e.g. the container being dropped and/or that the container has been properly released upon final placement.

A sensor may also be configured to identify the type of alignment body connected to the housing (e.g. an alignment body for different can lids, (e.g. 200 series vs 202 series), having different diameters). The sensor may be configured to output a signal indicative of what type of alignment body is connected that, for example, the control system of the machine may verify that the type and/or size of alignment body is commensurate with the type and size of product being produced.

The gripper device may further comprise a vacuum generator.

The vacuum generator is intended to refer to a compressed air driven vacuum generation device. The vacuum generator may form part of the gripper device, or form part of the transportation device onto which the gripper is mounted. In the present example embodiment an inline version of the vacuum generator is described which is mounted within the slim form factor of the gripper so that the overall gripper cross section remains smaller than the diameter of the smallest container. The in-line vacuum generator may therefore only service the gripper device. The toolless quick connect mounting of the gripper in the machine head or transportation device incorporates a compressed air pneumatic connection along with any sensor connections. In the example embodiment, with an inline vacuum generator integrated into the gripper housing, the same compressed air pneumatic connection serving a bellows (tulip) type bottle gripper would, upon gripper change, also serve the vacuum gripper device. In contrast, in other embodiments the gripper device may not incorporate an in-line vacuum generator and may be instead be provided in fluid communication with a centralised vacuum generator (e.g. which provides a pressure reduction for a plurality of gripper devices).

Advantageously, an in-line vacuum generator provides faster response times for gripping and releasing containers.

The container may be a beverage container, preferably an aluminium can beverage container.

The container may otherwise be a food container, such as a tin can. The container may otherwise be, for example, a glass jar. The container and hence the rim or feature used to locate the container with, need not be circular. For example, the container could be oval, obround or pear shaped, preferably requiring the scanning of the container orientation and the pre-alignment of the gripper with the scanned alignment for initial container picking before they are rotated to uniform alignment for e.g. placement in secondary packaging. The gripper device may be used in combination with any container having a comparatively flat region, by which the bellows suction cup can engage the container, and a rim or other feature by which the alignment body can locate and align the container.

A major diameter of the gripper device may be smaller than a major diameter of the container.

A major diameter of the gripper device may for example, be less than around 53 mm to handle Slim beverage cans (with 200 series lids) or less than around 58 mm to handle Sleek beverage cans (with 202 series lids).

Advantageously, a major diameter of the gripper device being smaller than a major diameter of the container means that the gripper device can be used to pick and/or place containers side by side in an orthogonal or nested arrangement without disturbing adjacent containers or gripper devices (if applicable).

The gripper device may be for gripping a single container only.

The bellows suction cup may be configured to grip only a single container. The gripper device being for gripping a single container overly is advantageous in being able to adjust the rotational position of individual containers for, for example, collation in a multipack. Furthermore, individual adjustments can be made to the container. Individual containers can be gripped even when there is no gap between the containers (e.g. can be gripped even when the container contacts an adjacent container).

According to a second aspect of the invention there is provided a system for transporting containers, the system comprising:
one or more gripper devices, according to the first aspect of the invention, for gripping one or more containers.

In a system comprising a plurality of gripper devices, each of the gripper devices is preferably individually movable.

The system may comprise one or more sensors. The one or more sensors may be configured to detect the presence and type of gripper device mounted to the transportation device. The one or more sensors may be configured to detect the presence, type and size of alignment body (cradle) mounted in the gripper device. The one or more sensors may be configured to detect a container being gripped by the gripper device.

According to a third aspect of the invention there is provided a method of gripping a container using a gripper device, the method comprising:
moving a lip of a bellows suction cup of the gripper device, in an extended configuration, towards the container;
reducing the pressure within the bellows suction cup to grip the container and axially retract the lip of the bellows suction cup relative to an alignment body in a gripping configuration; and
upon retracting the lip of the bellows suction cup, locating the container with the gripper device by urging the container into engagement with the alignment body.

Reducing the pressure within the bellows suction cup may comprise creating a vacuum within the bellows suction cup. The lip of the bellows suction cup may axially retract only once the pressure within the bellows suction cup reduces to a sufficient level.

Moving a lip of the suction cup towards the container may comprise moving a lip of the suction cup into engagement with the container.

Advantageously, the method of gripping a container as described above both grips and locates the container in a single step. The position of the container is thus fixed with respect to the gripper device, and the gripper device can be manipulated as is needed to adjust the position of the container for, for example, collation in a multipack.

Optional and/or preferred features as set out herein may be used either individually or in combination with each other where appropriate and particularly in the combinations as set out in the accompanying claims. The optional and/or preferred features for each aspect of the invention set out herein are also applicable to any other aspects of the invention, where appropriate.

### BRIEF FIGURE LIST

Specific embodiments of the present invention will now be described, by way of example only, with reference to the accompany drawings in which:
Figure 1 is a cross-section side view of a gripper device according to an embodiment of the invention;
Figure 2 is a perspective view of the gripper device of Figure 1;
Figures 3 to 5 schematically indicate a method of gripping a container using the gripper device of Figures 1 and 2;
Figure 6 is a magnified view of Figure 4 showing the first interaction between the container and the alignment body and the bellows suction cup of the gripper device;
Figure 7 is a magnified view of Figure 5 showing the retracted under vacuum interaction between the container, the alignment body and the bellow suction cup of the gripper device;
Figure 8 is a perspective side view of the gripper device gripping a container; and
Figure 9 is a cross-section side view of the gripper device shown moving towards a sealed can.

### DETAILED DESCRIPTION

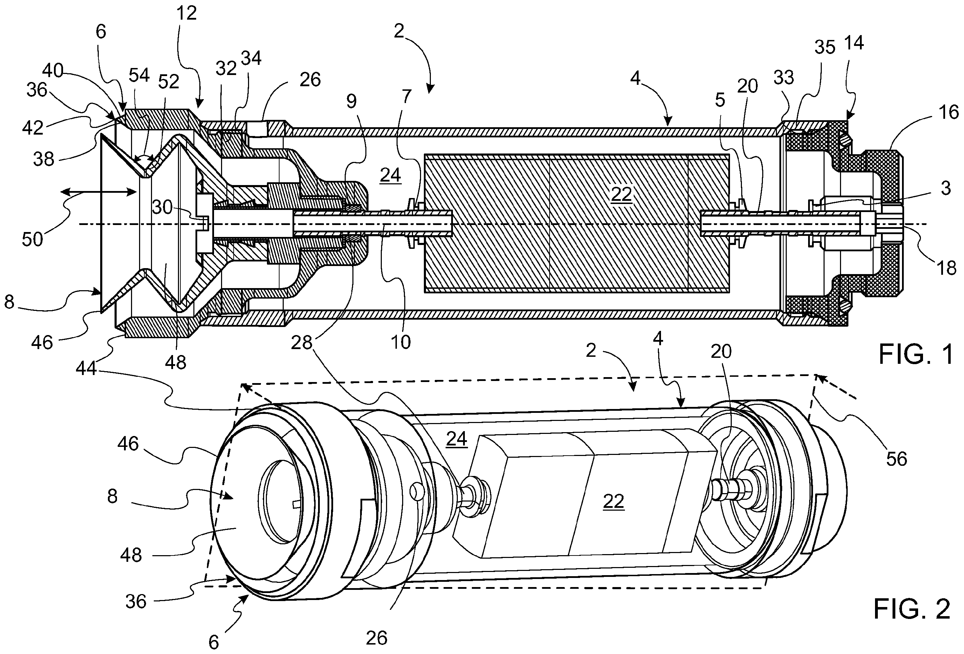

Figure 1 is a cross-section side view of a gripper device 2 according to an embodiment of the invention. The gripper device 2 comprises a housing 4, an alignment body 6 and a bellows suction cup 8, a vacuum generator 22, a connector 16 and a pneumatic connection 18.

The housing 4 is generally cylindrical and extends in an axial direction as defined by axis 10. The housing 4 has a first end 12 and a second, opposing end 14. The alignment body 6 and the bellows suction cup 8 are provided at the first end 12 of the housing 4. At the second end 14 of the housing 4, a connector 16 is provided by which the gripper device 2 is mounted to a robotic arm, independent mover of a transport system, machine head or similar. In the illustrated embodiment the connector 16 takes the form of a screw connector. However, in other embodiments the gripper device 4 may otherwise be connected to the said robotic arm, independent mover of a transport system, machine head or similar, using an alternative connector (e.g. a bayonet coupling, twist-lock, spline or keyed collet and lock nut etc.) could otherwise be used. The gripper device 2 may be mounted to a docking station. Mounting, or docking, the gripper device 2 may also provide any pneumatic and/or electrical connections (where appropriate). Electrical connections include connections for any powered and controlled devices (e.g. a wireless client, sensors, solenoid valves etc.).

Also provided at the second end 14 of the housing 4 is a port 18 of a first conduit 20, through which compressed air is received. The compressed air may be delivered at between around 0.55 MPa to around 0.6 MPa. The first conduit 20 is thus a dedicated supply conduit (e.g. compressed air supply) for the gripper device 2. The conduit 20 is provided in fluid communication with an in-line vacuum generator 22 in the illustrated embodiment. In other embodiments the vacuum generator may be located on the machine side of second end 14 connector 16 and hence the first conduit 20 may of a larger diameter providing vacuum to the bellows suction cup 8 at the first side 12 of what could be a shorter length and yet more compact housing 4. In other embodiments the conduit 20 may instead be a vacuum line connectable to a (central) vacuum generator which provides a reduced pressure for a plurality of different gripper devices. However, advantageously the incorporation of a single in-line vacuum generator 22 means that the response time for attachment and detachment using the gripper device 2 is improved (e.g. may be < 35 ms), and without excessive latency from an associated signal and the compressed air line is of smaller diameter, lighter in weight and more flexible than a collapse resistant, larger bore vacuum line would be, i.e. the need for stronger, more resilient (and so generally motion-resistant), conduits between the gripper device 2 and a central vacuum generator is avoided by incorporating the in-line vacuum generator 22. The vacuum generator 22 is disposed in a chamber 24 defined by the housing 4. Apertures 26 (only one of which is visible in Figure 1) are provided through the housing 4 in fluid communication with the chamber 24. The apertures 26 provide a venting functionality for expelling compressed air from the vacuum generator 22, facilitating the generation of the vacuum by the Bernoulli effect.

Connected to an opposing end of the vacuum generator 22 to that of the first conduit 20 is a second conduit 28. In use, the second conduit 28 connects the bellows suction cup 8 to the vacuum generator 22 to provide a reduced pressure, e.g. a vacuum, within the bellows suction cup 8. The second conduit 28 places the bellows suction cup 8 in fluid communication with the vacuum generator 22 via a port 30 forming part of the bellows suction cup 8.

In this embodiment the first conduit 20 places the second end 14 (and associated connector 16) in fluid communication with the inline vacuum generator 22 via a quick connect collet fitting 3 in the second end 14 and via similar collet fitting 5 at the inlet to the inline vacuum generator 22. The second conduit 28 connected via (in this embodiment) a third collect fitting 7 at the discharge from the vacuum generator 22 provides the pneumatic line onto which the bellows suction cup 8 shall be connected. The second end 14, first supply conduit 20, inline vacuum generator 22 and second supply conduit 28, together with associated connection fittings, 3, 5 and 7, respectively, form a sub-assembly which, in this embodiment is screwed into the second end of housing 4. In the illustrated embodiment the mounting of the sub-assembly in the housing is achieved by way of a screw connection. The screw connection is achieve by way of threaded engagement between a collar 33 of the second end 14 and a corresponding threaded bore 35 of the housing 4.

In this embodiment, the alignment body 6 and the bellows suction cup 8 form a sub-assembly which is partially inserted into the first end of housing 4 making a collet-less push connection with seal 9 before being screwed home into housing 4 via external threaded connection 32 engaging with internal threaded bore 34 of housing 4. The push connection of second conduit 28 in seal 9 of bellows suction cup 8 therefore permits final assembly of the gripper and in this embodiment the alignment body 6 and bellows suction cup 8 are an exchangeable sub-assembly.

Turning to describe the alignment body 6 in more detail, as previously mentioned the alignment body 6 is provided at the first end 12 of the housing 4. In the illustrated embodiment the alignment body 6 and bellows suction cup 8 are a sub-assembly which is modular such that it can be disconnected and reconnected to the housing 4. Furthermore, the alignment body 6 and bellows suction cup 8 sub-assembly can be swapped out for other alignment bodies such that the gripper device 2 is multipurpose. In the illustrated embodiment the modularity of the alignment body 6 and bellows suction cup 8 sub-assembly is achieved by way of a screw connection. The screw connection is achieved by way of threaded engagement between a collar 32 of the alignment body 6 and a corresponding threaded bore 34 of the housing 4. It will be appreciated that, in other embodiments, other modular connections e.g. a bayonet coupling, twist-lock, spline or keyed collet and lock nut etc. could otherwise be used.

In use, and as will be described in greater detail in the following Figures, the alignment body 6 is engageable with a container which is gripped by the gripper device 2 to locate the container relative to the alignment body 6 and the gripper device 2. The location is three-fold in that the container is located axially along the axis 10 (e.g. axially), is also located in a plane normal to the axis 10 (e.g. concentrically) and is cause to centralise that the container is coaxial with the gripper. The alignment body 6 may be described as a cradle.

In the illustrated embodiment the alignment body 6 comprises an alignment ring 36. The alignment ring 36 extends entirely around the axis 10, in a circumferential manner, in the illustrated embodiment. However, in other embodiments the alignment ring 36 may be intermittent about the axis 10 whilst still providing a centering, or locating, effect. The alignment ring 36 may otherwise be described as an alignment rim. The alignment ring 36 comprises an internal surface 38 and an external surface 40, both of which are tapered in the illustrated embodiment. An outermost point of the alignment ring 36, where the internal and external surfaces 38, 40 meet, is a tip 42.

In use, and as will be described in detail in the following Figures, it is the interaction between a container which is gripped and the alignment ring 36, specifically the external surface 40 thereof in the illustrated embodiment, which locates the lid of the container in a plane normal to the axis 10 with respect to the gripper device 2 and thus the axis of the container at least parallel to the axis of the gripper. The centering effect of the alignment ring guides the axes to be approximately coaxial. In other embodiments it will be appreciated that the internal surface 38 of the alignment ring 36 may engage the container to locate the container in the plane normal to the axis 10.

The alignment body 36 further comprises a shoulder 44. The shoulder 44 takes the form of an annular ledge that extends around the axis 10 in the illustrated embodiment. Like the alignment ring 36, the shoulder 44 is a continuous, circumferential surface in the illustrated embodiment but, in other embodiments, may be intermittent about the axis 10. The shoulder 44 is configured to axially locate the container which is gripped in a direction of the axis 10 (e.g. axially). The shoulder 44 may therefore otherwise be described as a backstop, or as a datum face.

For reasons which will be described in connection with the following Figures, the combination of the alignment ring 36 and the shoulder 44 both concentrically and axially align a gripped container in operation, as well as set the axial position relative to the gripper.

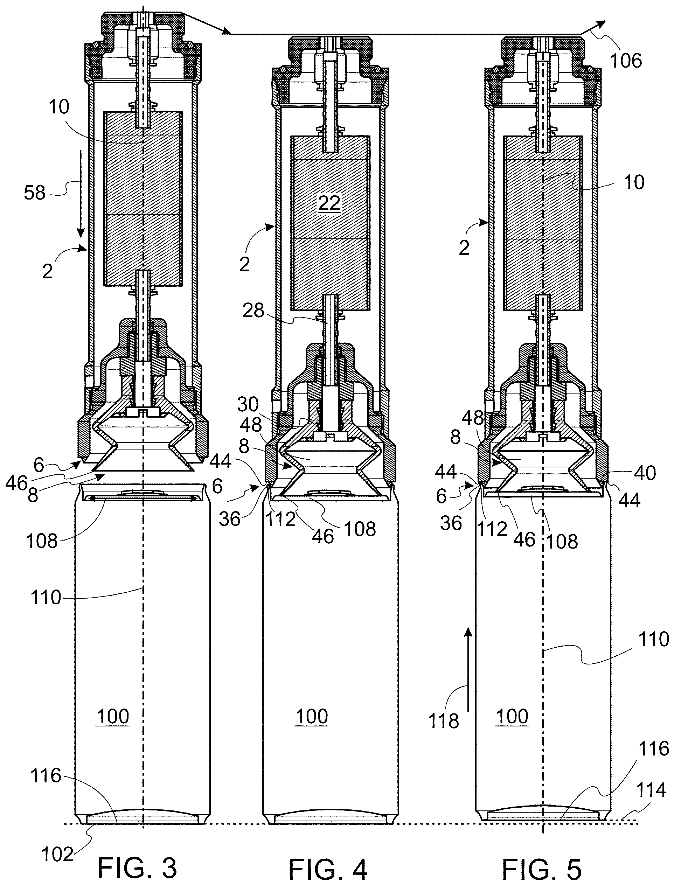

Turning to describe the bellows suction cup 8 in more detail, as has already been described the bellows suction cup 8 is provided at the first end 12 of the housing 4. The bellows suction cup 8 comprises a lip 46. The lip 46 extends circumferentially around the axis 10. The lip 46 is engageable with the container to be gripped. The bellows suction cup 8 has an extended configuration, as shown in Figure 1, and a gripping configuration as shown in Figures 4 and 5. In the extended configuration, the lip 46 projects axially beyond the alignment body 6 and therefore makes first contact with the container to be gripped and also provides last contact upon release of a container. This may otherwise be described as a soft (e.g. cushioned) first contact with the container. This is advantageous in avoiding rigid mechanical interference (e.g. a clash) with a non-deformable portion of the gripper device 2 which could otherwise risk damaging or disturbing the rotary orientation of the container. The soft first contact is also advantageous in that the gripper device 2 can tolerate some axial misalignment of the container with respect to the gripper device 2. The extended configuration may otherwise be described as an at rest configuration of the bellows suction cup 8 when a pressure within the bellows suction cup is atmospheric. The bellows suction cup 8 may be described as an actuator.

In the gripping configuration, the lip 46 is engageable with the container such that the lip 46 forms a seal around the container. Upon engagement of the lip 46 with the container, and the reduction of pressure, via a vacuum generator 22, through second conduit 28 and the port 30 at an interior 48 of the bellows suction cup 8, the bellows suction cup 8, including the lip 46 thereof, grip the container and retract axially. Axial retraction may otherwise be described as longitudinal retraction. The retraction occurs due to atmospheric pressure on the outside of the (in this embodiment) single pleat causing the pleat of the bellows to tend to collapse (has a narrower V) and this overall a reduced axial length of the bellows suction cup. The retraction occurs with respect to the alignment body 6 such that a gripped container is urged into engagement with the alignment body 6 (e.g. specifically with the external surface 40 thereof in the illustrated embodiment) to locate (center) the container with respect to the alignment body 6. Continued axial retraction of the bellows suction cup 8 results in the container engaging the shoulder 44 to axially align the container with respect to the gripper device 2 (as well as locating the container in a plane normal to the axis 10 by virtue of engagement with the alignment ring 36) and set the axial position of the container against the datum face.

By virtue of the retraction of the bellows suction cup 8 and interaction of the container with the alignment body 6, the container is aligned both axially and concentrically with respect to the gripper device 2. This is particularly advantageous for the gripping of a single container where it is necessary to align the container with respect to the gripper device 2 in multiple directions.

For the avoidance of doubt, the lip 46 of the bellows suction cup 8, and so the bellows suction cup 8 more generally, is deformable in the axial direction as indicated by arrow 50. A feature of the bellows suction cup 8 which provides this functionality is a concertina-like fold, or crease, 52 of the bellows suction cup 8. By virtue of incorporation of the fold 52, the bellows suction cup 8 is deformable, like that that of an accordion, whereby an angle 54 defined by the fold 52 increases or decreases to alter an axial extent of the bellows suction cup 8 by moving the lip 46 in the axial direction 50.

Whilst the container is firmly gripped by the gripper device 2 it will be appreciated that the container can be manipulated in any of the six degrees of freedom and thus including and not limited to axial movement and rotation about the axis to e.g. spin the container or e.g. rotate to orient presentation face of a labelled or otherwise decorated container.

The level of pressure within the interior 48 of the bellows suction cup 8 in the gripping configuration may be around 90 kPa (e.g. a deep vacuum, close to a full vacuum).

When it is desired to release the container from the gripper device 2, the vacuum generator 22 is deactivated. This, in turn, results in the pressure increasing in the interior 48 of the bellows suction cup 8. The pressure in the interior 48 of the bellows suction cup 8 thus returns to atmospheric pressure and the bellows suction cup 8 re-inflates (e.g. extends in the axial direction 50). The container is still temporarily held by the bellows suction cup 8 until such a point where the force exerted on the container reduces to less than a weight of the container, whereby the lip 46 disengages from the container and the container is placed on a proximate supporting surface. Whilst the container is in the process of being gripped by the gripper device 2, and whilst the container is in the process of being detached from the gripper device 2, owing to the torsional stiffness of the bellows suction cup 8, the rotational position of the container about the axis 10 remains generally fixed. Described another way, a rotational position of the container remains generally fixed relative to the gripper device 2 whilst the container is gripped. It will be appreciated that there may be small deviations in the rotational position of the container, but by substantially less than around 3 degrees.

Further, whilst the container is in the process of being gripped by the gripper device 2, radial off-set perpendicular to the axis of the gripper may be taken up by the bellows suction cup as the container is centralised by the alignment body. That is to say, that while remaining torsionally resistant to rotary distortion and thus tending to maintain the rotary alignment of a gripped container, and while actuating the gripped container up against the alignment body, the bellow suction cup is able to accommodate a degree of radial movement as the can is centralised over the centering ring of the alignment body.

Advantageously, the gripper device 2 can therefore be used to adjust the rotational position of the container by virtue of rotation of the overall gripper device 2. With the container firmly attached by and coaxial with the gripper, the temporary assembly may be rotationally adjusted or spun within the confines of the cross section of the container. Thus multiple containers held by multiple grippers in close clearance pitch with respect to each other could each be individually rotated without interference. This is particularly advantageous for aligning a plurality of containers, using respective gripper devices 2, such they are all in a uniform or prescribed different rotational alignment before being packaged in, for example, secondary packaging.

Turning briefly to Figure 2, a perspective view of the gripper device 2 is provided. Various features described in connection with Figure 1 are labelled including the housing 4, alignment body 6 and bellows suction cup 8. Also labelled for completeness are first and second conduits 20, 28, the in-line vacuum generator 22, the chamber 24, the alignment ring 36 and the shoulder 44 of the alignment body 6, and the lip 46 and interior 48 of the bellows suction cup 8. Also schematically indicated in Figure 2 is a plane 56 about which the cross-section shown in Figure 1 is taken.

As would be appreciated from Figure 2, the gripper device 2 is generally cylindrical in nature and the lip 46 of the bellows suction cup 8 is circular.

Turning to Figures 3 to 5, a method of operation of the gripper device 2 will now be described. Figures 3 to 5 show the gripper device 2 interacting with a container 100 in three consecutive stages of a method of gripping the container 100. For completeness, Figures 3 to 5 also show a supporting surface 102 (e.g. a flat stationary surface or a moving surface, such as a conveyor belt, with which the gripper device 2 moves such that there is low, or no, relative velocity) and a profile 106 of the motion of the gripper device 2. The profile 106 thus shows the relative axial position of the gripper device with respect to the container 100 and support surface 102 at the three different stages of the method. The container 100 is supported at its base 116 by the supporting surface 102 in the steps shown in both Figures 3 and 4. In Figure 5 the container 100 is supported by the gripper device 2.

In a first step of the method, as shown in Figure 3, the lip 46 of the bellows suction cup 8 is in the relaxed, non-vacuum, extended configuration. As such, the lip 46 projects axially beyond the alignment body 6. The gripper device 2 is then lowered axially, in a direction 58 towards the container 100. As previously described, the gripper device 2 is manipulated by way of a robotic arm or similar, which is not shown in Figures 3 to 5. The gripper device 2 may be located on an independently controlled linear driver or other individual, independently controlled mover. At the point where the gripper device 2 is lowered in the direction 58 towards the container 100, the gripper device 2 is roughly aligned with the container 100 insofar as the lip 46 of the bellows suction cup 8 concentrically overlaps an end face 108 of the container 100 (an arrow is included in Figure 3 to illustrate the extent of the end face). Although in the illustrated embodiment the axis 10 of the gripper device 2 is substantially coaxial with an axis 110 of the container 100, it will be appreciated that this is not necessarily the case in use and that an offset between the two axes, to the extent that the lip 46 still overlaps the end face 108, is permissible.

By virtue of the lip 46 of the bellows suction cup 8 projecting axially beyond the alignment body 6, the first contact the gripper device 2 makes with the container 100 is via the bellows suction cup 8, and specifically the lip 46 thereof. This is advantageous in avoiding rigid mechanical interference that could otherwise risk damaging or substantially disturbing the angular orientation of the container 100.

Turning to Figure 4, a first phase of a gripping configuration of the gripper device 2 is shown. As is indicated by the profile 106 of gripper device motion, in the steps shown in Figure 4 the gripper device 2 has moved axially towards the container 100 in the direction 58 shown in Figure 3. In Figure 4 the gripper device 2 has moved towards the container 100 by such an extent that the lip 46 of the bellows suction device 8 engages the container 100. Specifically, the lip 46 engages the end face 108 of the container 100.

With the lip 46 of the bellows suction cup 8 in engagement with the end face 108 of the container 100, the lip 46 seals the interior 48 of the bellows suction cup 8. If not already activated, the in-line vacuum generator 22 is activated once the lip 46 engages the end face 108. By virtue of the pressure reduction generated by the in-line vacuum generator 22, which is in communication with the interior 48 of the bellows suction cup 8 via the second conduit 28 and the port 30, the pressure within the bellows suction cup 8 is reduced. By virtue of the pressure within the bellows suction cup 8 reducing, the container 100, specifically the end 108 thereof, is gripped by the bellows suction cup 8. Any unintentional rotation of the container 100, relative to the gripping device 2, is thus substantially prevented by virtue of the gripping. Described another way, the rotational position of the container 100 is fixed with respect to the gripper device 2 at the point where the container 100 is gripped. This is at least by virtue of the torsional stiffness of the bellows suction cup 8 resisting and providing a counter moment to being twisted. At this point in the process, a first phase of the gripping configuration, a rim 112 of the container 100 (theoretically) does not contact the alignment body 6 (if it does it would be due to misalignment which shall be corrected in the next steps of the gripping and alignment process). The rim 112 of the container 100 therefore does not contact either the alignment ring 36 or the shoulder 44. For completeness, because the in-line vacuum generator 22 actively reduces the pressure within the bellows suction cup 8 whilst the container 100 is gripped, the bellows suction cup 8 can tolerate a small leak (e.g. an imperfect seal between the lip 46 and the container 100) whilst still being able to grip the container 100. The said small leak typically being sealed upon increased vacuum as the atmospheric pressure presses the lip of the suction cup 8 against the can lid 108. The rim 112 of the container 100 is provided at a top end of the container 100. The rim 112 may be described as a seamed end of the container. It will be appreciated that the gripper device 2 could equally grip a bottom end of the container 100. It will be appreciated that in another embodiment where the rim 112 profile of the container may not be circular, that upon orientation scanning of the containers, the gripper heads would be translated and rotated to not only align with the positions of the respective containers, but also with the individual orientations thereof.

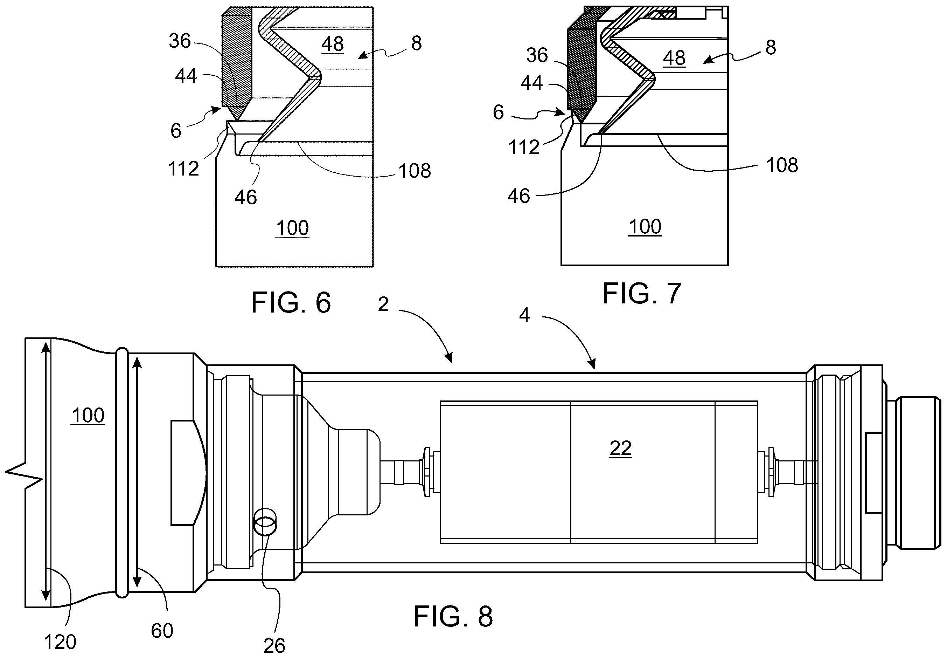

Figure 6 is a magnified view showing the interaction between the container 100 and the alignment body 6 and the bellows suction cup 8 for the first phase of the gripping configuration shown in Figure 4. As mentioned above, unless there is substantial misalignment, which shall be corrected via the centering rim 44 of alignment body 6 acting on the seam of the can end 108, there is no contact between the container 100, and more specifically the can end 108 and the alignment body 6 and, instead, a gap is present between the container 100 and the alignment body 6.

Turning to Figure 5, the device 2 is shown with the bellows suction cup 8 in a second phase of the gripping configuration. As shown in Figure 5, after the lip 46 forms the seal with the container 100 as shown in Figure 4, a continued reduction in pressure at the interior 48 of the bellows suction cup 8 causes the lip 46 of the bellows suction cup 8 to axially retract relative to the alignment body 6 (e.g. in direction 118). Described another way, as shown in Figure 5 the lip 46 of the bellows suction cup 8 moves in an upward direction. By virtue of the container 100 being gripped by the bellows suction cup 8, the container 100 is drawn axially towards the gripper device 2 (e.g. in direction 118). As shown in Figure 5, the container 100 is therefore lifted off the support surface 102 as indicated by line 114 that corresponds to a plane in which the base 116 of the container lies and from being base supported the can transitions to being gripper supported.

As the container 100 is drawn towards the gripper device 2, the container 100 is urged into engagement with the alignment body 6. By virtue of this engagement, the container 100 is located with respect to the gripper device 2. Described another way, the container 100 is urged into concentric alignment with the gripper device 2 such that the axis 10, 110 of the gripper device 2 and the container 100 respectively are collinear. In the illustrated embodiment, the rim 112 of the container 100 first engages the alignment ring 36, specifically the external surface 40 thereof. Because the external surface 40 of the alignment ring 36 is tapered, continued upward movement of the container 100 concentrically aligns the rim 112 about the alignment ring 36. The container 100 is thus centralised with respect to the gripper device 2. The rim 112 of the container 100 may be said to ride over a corresponding profile of the alignment ring 36. At an end of the travel of the container 100 the rim 112 engages the shoulder 44 of the alignment body 6 which axially delimits the travel of the container 100. Put another way, the container 100 is axially aligned by virtue of engagement of the rim 112 with the shoulder 44. The container 100 is then held in this position by virtue of the reduced pressure within the interior 48 of the bellows suction cup 8 until such a time where it is desired to release, or detach, the container 100. As has been previously described, whilst the container 100 is gripped, by virtue of the manipulation of gripper device 2, the container 100 can be translated and/or rotated. Furthermore, the gripping force is strong enough to support a weight of a filled container, and overcome the associated linear and/or rotary inertial effects (e.g. <5G) until released i.e. through all picking, lifting, transferring, accelerating/decelerating, pitching, grouping, orienting, rotating and placing operations. As shown in Figure 5, the container 100 is concentrically and axially aligned with respect to the gripper device 2 by virtue of the axis 110 of the container 100 being both parallel, and collinear, with the axis 10 of the gripper device 2. As will be appreciated by Figure 5, the slender, cylindrical profile of the gripper is of smaller cross sectional dimension to that of the container and thus the assembled cylindrical profile can be rotated (like a shaft) while being, maybe, immediately next to another gripper and container being handled in the same manner.

Figure 7 is a magnified view showing the interaction between the alignment body 6 and the rim 112 of the container 100 in the second phase of the gripping configuration shown in Figure 5. Figure 7 thus illustrates that the rim 112 of the container 100 is seated, or nested, against both the alignment ring 36 and the shoulder 44. The container 100 is thus axially aligned with respect to the gripper device 2 and also centered with respect to the gripper device 2.

Returning to Figure 5, when it is desired to detach, or release, the container 100, the vacuum generator 22 is deactivated and the pressure at the interior 48 of the bellows suction cup 8 returns to atmosphere. This results in the bellows suction cup 8 re-inflating (e.g. axially extending), whilst still momentarily gripping the container 100, as shown moving from Figure 5 to Figure 4. Furthermore, this occurs whilst the rotational position of the container 100 is held by the bellow suction cup and thus substantially fixed with respect to the gripper device 2 (e.g. the rotational orientation of the container 100 is not unintentionally disturbed). Alternatively, the interior 48 of the bellows suction cup 8 may be connected or connectable to a compressed air supply, e.g. via a conduit, to increase the pressure within the bellows suction cup 8 and re-inflate the bellows suction cup 8. When the pressure within the bellows suction cup 8 increases to a level where the bellows suction cup 8 can no longer exert a sufficient gripping force on the container 100, the container 100 detaches from the gripper device 2. Of importance, the final contact between the container 100 and the gripper device 2 is via the lip 46 of the bellows suction cup 8. As was described in connection with the attachment process, the final, or last, contact with the container 100 is also soft contact (e.g. cushioned) and not by way of rigid mechanical interaction. This reduces the risk of damage or disturbance of the angular orientation occurring to the container 100 upon release. The soft contact feature at gripping and/or releasing operations avoid mechanical interference (bottoming out) between the machine mechanism, the container and the surface the container is base supported off. The gripper is thus able to be brought near the plane upon which first soft contact/release may be executed and then the gripper gripping and actuating the container through the mechanical clearance, before mechanical interference would occur (and visa versa for the release operation).

In another embodiment the attach and retract operation may be executed via a standard suction cup without bellows, i.e. with the bellows replaced by a vacuum induced retraction/actuation of a standard suction cup mounted on a suitable piston or slide mechanism. In this manner, the stroke of the retraction/actuation may be configured to be longer and the speed of operation more readily controlled. That is to say, although in the present embodiment a base (e.g. mounting) of the suction cup is substantially fixed in position, in other embodiments the position of the base of the suction cup may change in use (e.g. be axially moveable).

Where the supporting surface 114 is static, the process may be described as a static grip and/or release. Where the supporting surface 114 is moving (e.g. a conveyor belt which is moving but with no relative velocity with respect to the gripper device 2), the process may be described as a dynamic grip and/or release.

Turning to Figure 8, a perspective side view of the gripper device 2 gripping a container 100 in the gripping configuration is provided. The container 100 is partly cutaway in Figure 8. Figure 8 indicates how a major diameter 60 of the gripper device 2 is smaller than a major diameter 120 of the container 100. Advantageously, this means the gripper device 2 can grip a single container 100 and side-by-side picking, grouping and placement of individual containers (e.g. in orthogonal [row/column - with 4 points of contact] or nested [i.e. 3 points of contact] patterns) can be carried out. The gripper device 2 can therefore be for gripping a single container only. Described another way, the gripper device 2 may grip only a single container.

In the illustrated embodiment the container 100 being gripped is a can, specifically a beverage can manufactured from aluminium. However, it will be appreciated that the gripper device 2 could equally be used to grip beverage cans made of other materials and/or containers which contain other products and/or other varieties of container (e.g. glass jars). Tin cans, for example containing food, could also readily be gripped by the gripper device 2. Round, oval or otherwise cross-sectionally profiled tin cans may be gripped by the gripper device 2. Where the container 100 is a beverage can, a smallest standard diameter may be around 53 mm. Is may therefore be desirable that a major diameter of the gripper device 2 be less than around 53 mm. Other standard diameters of cans are 58 mm, 66 mm and 76 mm. The gripper device 2 may be suitable for gripping beverage cans having a volume of around 150 ml to around 1000 ml.

Examples of beverages with which containers, suitable for gripping by the gripper device 2, may be filled with include: Tea, Coffee, Ready to Drink (RTD) beverages, Carbonated Soft Drink (CSD) beverages, Energy Drinks, Dairy Drinks, Beer, Wine, Water, Fortified Drinks, Juices, etc.

The gripper device 2 may be used to grip containers in a range of different industries including aerosol cans, home care products, personal care products, pet food, paints and lacquers (DIY) etc. With container position and orientation scanning (e.g. via a vision system) and pre-orientation and translation of the grippers to match the individual positions and orientations of the containers before execution of the picking (gripping) operations, non-circular containers may be successfully handled, e.g. oval, obround or pear shaped cans for e.g. canned fish, canned ham etc.

In other embodiments, and as previously been mentioned, the in-line vacuum generator 22 may be omitted and the gripper device 2 may instead be connected to a centralised vacuum supply (e.g. a vacuum generator which is connected to a plurality of gripper devices). However, advantageously the in-line vacuum generator provides for faster response times for both gripping and detaching containers. In yet other embodiments, as previously mentioned, the vacuum generator 22 may be located immediately on the opposite side of the gripper mounting, i.e. the robot or independent transportation mover or machine head or similar; side of the system), thus permitting a shorter more compact gripper but necessitating a vacuum connection through the second end 14 coupling 16 to directly engage with second supply conduit 28.

The gripper device 2 may further comprise a sensor. The sensor may be configured to detect engagement of the alignment body 6 with the container 100. The sensor may be able to detect a failed picking operation, a dropped or otherwise incorrectly retained container. In another embodiment the gripper device may comprise a sensor to detect which type of alignment body is connected to the device. In another embodiment the gripper device and/or the alignment body may comprise a means of identification such that the control system of the manipulation system (e.g. robot, independent transportation system or similar) may verify the gripping device is present and/or that the configuration of the gripping device, with the exchangeable alignment body, is correct for the intended operation.

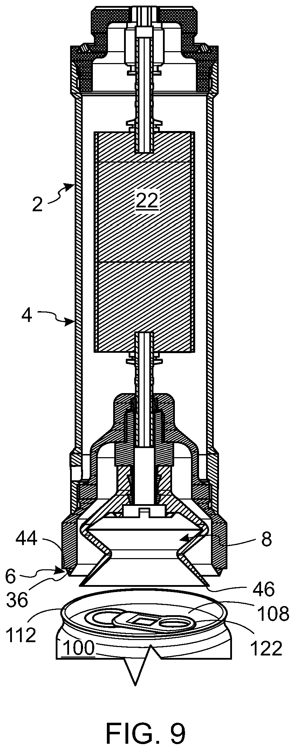

Figure 9 is a cross-section view of the gripper device 2 shown moving towards the container 100 where the container 100 is a can. It will be appreciated that the lip 46 of the bellows suction cup 8 extends around the ring pull 122 to be engageable with a top face 108, which is relatively flat, of the container 100. The lip 46 of the bellows suction cup 8 thus preferably engages a flat, annular surface.

The gripper device 2 may be configured to detect which alignment body 6 is attached (and, indeed, that any alignment body 6 is attached). In turn, a robotic arm or similar may be configured to detect which alignment body 6 is attached to the gripper device 2 and/or which gripper device 2 is attached. The identification may be by way of an RFID tag or similar, which may be applied to the alignment body 6 and/or the gripper device 2 more generally. Different alignment bodies may be adapted to align different types of container (e.g. in the case of cans, cans having different diameters, cross-sectional profiles and/or ring pulls/tabs etc.).

A needle valve and flow reversing solenoid may be incorporated to positively and more swiftly release (e.g. eject) a container from the gripper device. This may be particularly desirable for high container throughputs (e.g. >120,000 containers per hour). The ejection may occur by way of a reverse air pulse.

No power supply may be needed to operate the gripper device 2 unless a sensor or other electrical equipment is incorporated. Only a pneumatic connection may be needed.

Gripping an end face (e.g. top or bottom) of a container is advantageous in avoiding damage to container decoration and for the reasons that the material is typically thicker, work hardened and more rigid than, for example, gripping a cylindrical body of the container. Never the less with the appropriate location cradle, suction cup or bellows suction cup and management of the degree of applied vacuum, more delicate surfaces and/or non-circular containers may be gripped from other approaches/container orientations than from the top and with other shaped suction cup than round suction cups (e.g. oval).

The robotic arm, mover or similar to which the gripper device 2 is mounted, may be mounted to a track which is an open loop straight, a virtual loop, a closed loop and/or which incorporates curves and/or by way or independent arms and/or movers, is a chain track and or is reciprocating and/or continuous.

The gripper device 2 is particularly suited for placing containers into variety packs where the containers are filled with multiple containers of the same product and/or filled with different varieties of product (for example).

The present invention has been described above purely by way of example. Modifications in detail may be made to the present invention within the scope of the claims as appended hereto. Furthermore, features from one example may be combined with an alternative example unless such a combination is explicitly precluded.

## Claims

1. A gripper device for gripping a container, the gripper device comprising:
a housing comprising at least a first end and a second end, the housing extending in an axial direction;
a connector at the second end of the housing for mounting the gripper device to a transportation device;
an alignment body, provided at the first end of the housing, engageable with the container to locate the container; and
a suction cup, provided at the first end of the housing, the suction cup having a lip that is engageable with the container, the suction cup having an extended configuration and a gripping configuration, the suction cup being configured for fluid connection to a vacuum generator; wherein:
in the extended configuration, the lip of the suction cup projects axially beyond the alignment body for first contact with the container; and
in the gripping configuration, the lip of the suction cup is engageable with the container and is retracted axially, relative to the alignment body, such that the gripped container is urged into engagement with the alignment body to locate the container.

2. The gripper device according to claim 1, wherein the suction cup is configured to resist rotation of the lip, relative to the alignment body, between the extended configuration and the gripping configuration.

3. The gripper device according to claims 1 or 2, wherein the alignment body is configured to centralise and align the container relative to an axis of the gripper device.

4. The gripper device according to any preceding claim, wherein the alignment body comprises at least part of an alignment ring.

5. The gripper device according to any preceding claim, wherein an internal surface and/or an external surface of the alignment body is engageable with a corresponding feature of the container.

6. The gripper device according to any preceding claim, wherein the alignment body comprises a tapered surface configured to concentrically locate the container.

7. The gripper device according to any preceding claim, wherein the alignment body comprises a shoulder configured to axially locate the container.

8. The gripper device according to any preceding claim, wherein the alignment body is modular such that it can be disconnected and reconnected to the housing.

9. The gripper device according to any preceding claim, further comprising a sensor configured to detect the presence and/or type of alignment body mounted to the gripper device and/or engagement of the alignment body with the container.

10. The gripper device according to any preceding claim, further comprising an in-line vacuum generator.

11. The gripper device according to any preceding claim, wherein the container is a beverage container, preferably an aluminium can beverage container.

12. The gripper device according to any preceding claim, wherein a major diameter of the gripper device is smaller than a major diameter of the container.

13. The gripper device according to any preceding claim, wherein the gripper device is for gripping a single container only.

14. A system for transporting containers, the system comprising:
one or more gripper devices, according to any preceding claim, for gripping one or more containers.

15. A method of gripping a container using a gripper device, the method comprising:
moving a lip of a suction cup of the gripper device, in an extended configuration, towards the container;
reducing the pressure within the suction cup to grip the container and axially retract the lip of the suction cup relative to an alignment body in a gripping configuration; and
upon retracting the lip of the suction cup, locating the container with the gripper device by urging the container into engagement with the alignment body.
